Europäisches Patentamt

European Patent Office

Office européen des brevets

(19)

(11) Veröffentlichungsnummer: **0 058 252**
**B1**

(12) **EUROPÄISCHE PATENTSCHRIFT**

(45) Veröffentlichungstag der Patentschrift:
11.07.84

(21) Anmeldenummer: **81110528.7**

(22) Anmeldetag: **17.12.81**

(51) Int. Cl.³: **B 60 R 13/02**, F 16 B 25/00

(54) Befestigungsknopf für Fussmatten an Fahrzeugen.

(30) Priorität: **18.02.81 DE 8104458 U**

(43) Veröffentlichungstag der Anmeldung:
**25.08.82 Patentblatt 82/34**

(45) Bekanntmachung des Hinweises auf die Patenterteilung:
**11.07.84 Patentblatt 84/28**

(84) Benannte Vertragsstaaten:
**AT CH DE FR LI**

(56) Entgegenhaltungen:
**EP - A - 0 020 308**
**DE - A - 1 455 856**
**FR - A - 660 580**
**FR - A - 933 199**
**US - A - 1 756 186**
**US - A - 1 897 196**
**US - A - 3 752 030**

(73) Patentinhaber: **WEGU Gummi- und Kunststoffwerke Walter Dräbing KG, Mündener Strasse 31, D-3500 Kassel (DE)**

(72) Erfinder: **Dräbing, Walter, Am Schnepfenbusch 10, D-3501 Niestal (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

EP 0 058 252 B1

## Beschreibung

Die Erfindung bezieht sich auf einen Befestigungsknopf für Fussmatten an Fahrzeugen, mit einem Kopfteil zum Aufknüpfen der Fussmatte, der eine Fläche für den Ansatz eines Verdrehwerkzeuges und einen im wesentlichen zylindrischen Schaft aufweist, und mit einem mit Gewinde versehenen Fussteil, wobei zwischen Kopfteil und Fussteil ein Auflagerand vorgesehen ist.

Fahrzeuge, insbesondere Personenkraftwagen, werden im Bereich des Fussraumes mit Fussmatten aus Gummi, Kunststoff od. dgl. ausgelegt, um insbesondere während der kalten Jahreszeit miteingeschlepptes Wasser bzw. Schnee aufzunehmen, so dass diese Feuchtigkeit nicht auf den Teppichboden des Fussraumes und letztlich an das Bodenblech des Fahrzeuges gelangen kann. Diese Fussmatten müssen herausnehmbar sein, um das Wasser, welches sich dort gesammelt hat, auszuleeren, oder um eine Reinigung der Matten ausserhalb des Fahrzeuges vornehmen zu können. Da der Fussraum in aller Regel mit Teppichboden, einer schwer entfernbaren Gummiauskleidung, jeweils mit Dämmschichten unterlegt, versehen werden, liegen derartige Fussmatten aus Gummi, Kunststoff od. dgl. nicht rutschsicher auf dieser Unterlagsfläche. Es kommt regelmässig vor, dass die Fussmatten verrutschen, so dass sie den Fussraum nicht mehr optimal schützen und darüber hinaus in verrutschtem Zustand einen unschönen und unordentlichen Anblick bieten.

Um dem beschriebenen Problem entgegenzuwirken, ist ein Befestigungsknopf der eingangs beschriebenen Art bereits bekannt, der als Stahl- bzw. Aluminiumschraube ausgebildet ist und der in seinem Fussteil ein Gewinde besitzt, welches ähnlich dem bekannten Holzgewinde ausgebildet ist. Das Gewinde erstreckt sich über die gesamte Länge des Fussteils und endet unmittelbar an der unteren Auflagefläche eines Auflagerandes, der mit relativ kleinem Durchmesser den Übergang zum Kopfteil darstellt. Im Bereich des Kopfteiles ist ein zylindrischer Schaft vorgesehen, der an seinem freien Ende in einen verdickten Kopf übergeht. Im Kopf ist als Fläche für den Ansatz eines Verdrehwerkzeuges ein Schlitz zum Ansatz eines Schraubenziehers vorgesehen. Das Gewinde besitzt über seine relativ grosse axiale Länge – abgesehen von dem unmittelbaren Einschraubende – gleichen Kerndurchmesser und gleichen Radius des Gewindeganges, wie dies auch bei Holzschrauben üblich ist. Zur Befestigung eines derartigen Befestigungsknopfes in dem Fussraum eines Fahrzeuges ist es erforderlich, die Bodenwanne mit speziellen Einsickungen an den Stellen zu versehen, an denen später einmal die Befestigungsknöpfe angesetzt werden sollen. In diesen Einsickungen werden Lochbleche verankert, in die das Fussteil des Befestigungsknopfes mit seinem Gewinde eingreift und sich festzieht. Dies stellt einen erheblichen Aufwand bei der Herstellung der Bodenwanne dar. Trotzdem ist eine universelle Anwendbarkeit nicht gegeben, weil durch die Anordnung der Einsickungen der Platz, an welchem die Befestigungsknöpfe angeordnet werden, weitgehend vorgegeben sind. Es kommt aber bei den unterschiedlichen Körpergrössen der Kraftfahrer in individueller Anpassung und bei Verwendung unterschiedlich ausgebildeter Fussmatten durchaus vor, dass ein solcher Befestigungsknopf an einer Stelle befestigt werden müsste, an der sich die Einsickung in dem Bodenblech gerade nicht mehr befindet. Dort ist dann eine Verankerung des Befestigungsknopfes nicht möglich.

Der Erfindung liegt die Aufgabe zugrunde, einen Befestigungsknopf der eingangs beschriebenen Art derart weiterzubilden, dass er ohne besondere Ausbildung der Bodenwanne des Fahrzeuges überall dort universell einschraubbar ist, wo der Fussraum wenigstens mit einem Teppichboden, einer Gummiauskleidung – jeweils mit Dämmaterial unterlegt – versehen ist.

Erfindungsgemäss wird dies dadurch erreicht, dass als Gewinde am Fussteil bei kurzer axialer Länge ein Schneidgewinde grosser Steigung mit vom Einschraubende her über die ganze Länge wachsendem Kerndurchmesser und über die ganze Länge zunehmendem Radius des Gewindeganges vorgesehen ist, welches offen und mit Abstand zu dem Auflagerand endet, und dass das Gewinde etwa im Bereich des letzten, dem Auflagerand zugekehrten Halbganges höchstens eine sehr kleine Steigung aufweist. Der Befestigungsknopf ist in seinem Fussteil zunächst mit kurzer axialer Länge versehen, so dass er lediglich den Textilboden, wie Gummiauskleidung od. dgl., durchdringt und im verankerten Zustand noch etwas in die Dämmschicht hineinragt, jedoch nicht in die Bodenwanne eindringt. Damit findet eine Verankerung in dem Teppichboden, der Gummiauskleidung od. dgl. statt und ist somit vorteilhaft gleichsam an jeder beliebigen Stelle in universeller Anpassung möglich. Um das Eindringen des Befestigungsknopfes ohne vorbereitende Arbeiten, also insbesondere ohne das Bohren eines Loches an jeder Stelle zu ermöglichen, ist das Gewinde als Schneidgewinde grosser Steigung mit vom Einschraubende her über die ganze Länge wachsendem Kerndurchmesser und über die ganze Länge zunehmendem Radius des Gewindeganges ausgebildet. Es ist also lediglich erforderlich, die Befestigungsknöpfe von der Unterseite der Fussmatte her in diese einzuknöpfen, die Fussmatte dann mit den Befestigungsknöpfen passgerecht und je nach Wunsch in den Fussraum einzubringen und aufzulegen. Anschliessend wird von oben durch die Fussmatte hindurch der eingesetzte Befestigungsknopf eingeschraubt, so dass die Fussmatte sehr einfach einen genauen und passgerechten Sitz bekommt. Damit sich der Befestigungsknopf in dem Textilboden, der Gummiauskleidung od. dgl. auch ordnungsgemäss verankern kann und ein unbeabsichtigtes Lösen bzw. Herausreissen des Befestigungsknopfes auch dann nicht möglich ist, wenn die Fussmatte beispielsweise zum Entleeren von Wasser herausgenommen wird, endet das Gewinde offen und mit Abstand zu dem Auflagerand, wobei etwa im Bereich des letzten, dem Auflagerand zugekehrten Halbganges eine sehr kleine Steigung vorgesehen ist. Dieser letzte Halbgang bildet praktisch ein Widerlager am unteren Rand des Textilbodens und spannt diesen zwischen sich und der unteren Auflagefläche am Auflagerand ein.

Es gibt bei Befestigungsmitteln auf anderen Gebieten zwar einige der oben erwähnten Merkmale, z.B. bei der Schuhschraube aus der FR-A-933199, die ein Schneidgewinde aufweist, das über seine ganze Länge mit wachsendem Kerndurchmesser und zunehmendem Radius des Gewindegangs vorgesehen ist. Dieses Dokument gibt jedoch keinen Hinweis eine Steigungsveränderung vorzusehen.

Der erfindungsgemässe Befestigungsknopf besitzt eine Reihe von Vorteilen. Er lässt sich universal einsetzen, und zwar sowohl für Textilböden als auch an Gummiauskleidungen. Er lässt sich individuell und passgenau an jeder Stelle positionieren. Er ist besonders einfach in der Anwendung, weil zu seiner Montage lediglich ein Schraubenzieher od. dgl. erforderlich ist. Vorbereitende Arbeiten bei der Herstellung des Fahrzeuges, insbeondere der Bodenwanne, entfallen völlig. Der Befestigungsknopf ist wieder verwendbar und – einmal befestigt – weitgehend unverlierbar.

Das Schneidgewinde kann im Bereich etwa des letzten Halbganges parallel zum Auflagerand angeordnet und mit konstantem Radius dieses Halbganges versehen sein. Dies bedeutet, dass die Steigung im Bereich dieses letzten Halbganges Null ist, so dass damit ein Gegenlager für diesen Auflagerand geschaffen ist.

Der Auflagerand kann einen Durchmesser aufweisen, der etwa das Dreifache des Durchmessers des zylindrischen Schaftes am Kopfteil trägt. Damit ist sichergestellt, dass der Befestigungsknopf in eingeschraubtem Zustand sich auf der Oberfläche des Textilbodens, der Gummiauskleidung od. dgl. eben auflegt, also die Achse des Befestigungsknopfes senkrecht nach oben weist. Der Befestigungsknopf erhält bei dieser Ausbildung eine besonders kippstabile Lage und einen ordnungsgemässen Sitz. Der Auflagerand kann eine untere und eine obere Auflagefläche aufweisen. Die untere Auflagefläche dient zur Anlage am Textilboden, der Gummiauskleidung usw., während die obere Auflagefläche eine genaue Begrenzung für die Eindringtiefe des Knopfes beim Einknöpfen der Fussmatte darstellt. Es ist damit wirksam verhindert, dass der Knopf etwa aus der Fussmatte herausschauen könnte od. dgl.

Der Abstand zwischen dem letzten Halbgang des Schneidgewindes und der unteren Auflagefläche am Auflagerand beträgt etwa 3 mm. Dies erweist sich für eine universelle Verwendbarkeit besonders sinnvoll. Die meisten Textilböden können in diesem Bereich zusammengepresst werden, was dem Sitz des Befestigungsknopfes nur förderlich ist. Bei Gummiauskleidungen wird selten ein Auskleidungsmaterial verwendet, dessen Wandstärke mehr als 3 mm beträgt.

Zwischen der unteren Auflagefläche am Auflagerand und dem Ende des Schneidgewindes kann ein zylindrischer Verankerungsschaft vorgesehen sein. Sobald der Befestigungsknopf mit seinem Fussteil den Textilboden, die Auskleidung od. dgl. durchdrungen hat, dreht der Knopf frei durch und dringt nicht mehr tiefer ein.

Der Befestigungsknopf kann als Spritzteil aus Polyamid ausgebildet sein, so dass er sich besonders einfach herstellen lässt und keine Gefahr besteht, dass beim Eindrehen etwa die Bodenwanne verletzt werden könnte.

Die Erfindung wird nahand eines bevorzugten Ausführungsbeispieles weiter beschrieben. Es zeigen:

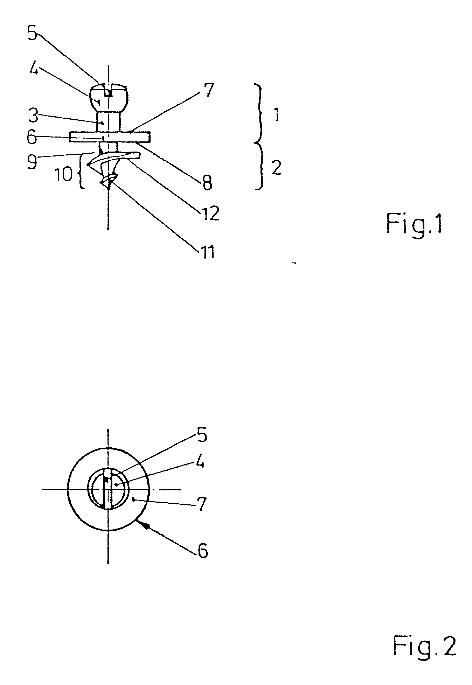

Fig. 1 eine Seitenansicht des Befestigungsknopfes und

Fig. 2 eine Draufsicht auf den Befestigungsknopf von oben.

Der in den Zeichnungen dargestellte Befestigungsknopf weist ein Kopfteil 1 und ein Fussteil 2 auf. Der Kopfteil 1 besteht im wesentlichen aus einem zylindrischen Schaft 3, der nach oben in einen verdickten Kopf 4 übergeht, in welchem ein Schlitz 5 für den Ansatz eines Verdrehwerkzeuges, also eines Schraubenziehers, vorgesehen ist. Es versteht sich, dass anstelle des Schlitzes 5 auch eine Innensechskantfläche od. dgl. vorgesehen sein könnte. Am Übergang zu dem Fussteil 2 besitzt der Kopfteil 1 einen umlaufenden Auflagerand 6 mit einer oberen Auflagefläche 7 und einer unteren Auflagefläche 8. Der Durchmesser des Auflagerandes 6 beträgt etwa das Dreifache des Durchmessers des zylindrischen Schaftes 3.

Der Fussteil 2 besteht im wesentlichen aus einem Verankerungsschaft 9 und einem Schneidgewinde 10, welches wachsenden Kerndurchmesser und wachsenden Radius seines Gewindeganges 11 aufweist. Der Radius des Gewindeganges 11 kann von Null auf Einschraubende bis zu ca. 6 mm im Bereich des letzten Halbganges 12 wachsen. Das Schneidgewinde 10 weist eine relativ grosse Steigung, beispielsweise 4 mm auf, die sich im wesentlichen über die gesamte axiale Länge des Schneidgewindes 10 erstreckt. Lediglich im Bereich des letzten Halbganges 12 ist die Steigung sehr klein, beispielsweise Null. Das Schneidgewinde 10 endet offen mit seinem letzten Halbgang 12 und im Abstand von der unteren Auflagefläche 8 des Auflagerandes 6. Der zylindrische Verankerungsschaft 9 kann eine axiale Länge von etwa 3 mm besitzen.

Die Anwendung des Befestigungsknopfes ist denkbar einfach: Bei einer Fussmatte werden üblicherweise zwei oder auch vier derartige Befestigungsknöpfe eingesetzt. Diese werden von unten in die Fussmatte eingeknöpft, wobei der Kopfteil 1 teilweise in die Fussmatte eindringt. Die Unterseite der Fussmatte setzt sich dabei auf der oberen Auflagefläche 7 des Auflagerandes 6 auf. In diesem Zustand wird die Matte mit den Befestigungsknöpfen je nach Wunsch und Erfordernis im Fussraum des Fahrzeuges positioniert. Es erfolgt dann das Festschrauben der Befestigungsknöpfe mit einem Schraubenzieher durch Eingriff in den Schlitz 5. Dabei dringt der Fussteil 2 in den Textilboden, die Gummiauskleidung od. dgl. ein. Es ist nicht erforderlich, ein Loch vorzuarbeiten.

Infolge der Anordnung des Verankerungsschaftes 9 dreht der Befestigungsknopf durch, sobald er seinen ordnungsgemässen Sitz erreicht hat. Dabei legt sich die untere Auflagefläche 8 des Auflagerandes 6 auf die Oberseite des Textilbodens, der Gummiauskleidung od. dgl. auf, so dass der Knopf senkrecht ausgerichtet wird. Das sehr kurz gehaltene Schneidgewinde 10 stört nicht, da es nur teilweise in die Dämmschicht eindringt, die üblicherweise zwischen den Textilböden, der Gummiauskleidung od. dgl. und der Bodenwanne des Fahrzeuges angeordnet ist. Zum Entleeren der Fussmatte wird diese aus der aufgeknüpften Verankerung an den Befestigungsknöpfen herausgelöst. Die Befestigungsknöpfe verbleiben während des Ausleervorganges im Fahrzeug und stehen daher positionsgenau wieder zur Verfügung, wenn die entleerte Matte wieder aufgeknüpft wird.

### Patentansprüche

1. Befestigungsknopf für Fussmatten an Fahrzeugen, mit einem Kopfteil (1) zum Anknüpfen der Fussmatte, der eine Fläche für den Ansatz eines Verdrehwerkzeuges und einen im wesentlichen zylindrischen Schaft (3) aufweist, und mit einem mit Gewinde versehenen Fussteil (2), wobei zwischen Kopfteil und Fussteil ein Auflagerand (6) vorgesehen ist, dadurch gekennzeichnet, dass als Gewinde am Fussteil (2) bei kurzer axialer Länge ein Schneidgewinde (10) grosser Steigung mit vom Einschraubende her über die ganze Länge wachsendem Kerndurchmesser und über die ganze Länge zunehmendem Radius des Gewindegangs (11) vorgesehen ist, welches offen und mit Abstand zu dem Auflagerand (6) endet, und dass das Gewinde etwa im Bereich des letzten, dem Auflagerand (6) zugekehrten Halbganges (12) höchstens eine sehr kleine Steigung aufweist.

2. Befestigungsknopf nach Anspruch 1, dadurch gekennzeichnet, dass das Schneidgewinde (10) im Bereich etwa des letzten Halbganges (12) parallel zum Auflagerand (6) angeordnet und mit konstantem Radius dieses Halbganges (12) versehen ist.

3. Befestigungsknopf nach Anspruch 1 und 2, dadurch gekennzeichnet, dass der Auflagerand (6) einen Durchmesser aufweist, der etwa das Dreifache des Durchmessers des zylindrischen Schaftes (3) am Kopfteil (1) beträgt.

4. Befestigungsknopf nach Anspruch 1 bis 3, dadurch gekennzeichnet, dass der Auflagerand (6) eine untere und eine obere Auflagefläche (8, 7) aufweist.

5. Befestigungsknopf nach Anspruch 1 bis 4, dadurch gekennzeichnet, dass der Abstand zwischen dem letzten Halbgang (12) des Schneigewindes (10) und der unteren Auflagefläche (8) am Auflagerand (6) etwa 3 mm beträgt.

6. Befestigungsknopf nach Anspruch 1 bis 5, dadurch gekennzeichnet, dass zwischen der unteren Auflagefläche (8) am Auflagerand (6) und dem Ende des Schneidgewindes (10) ein zylindrischer Verankerungsschaft (9) vorgesehen ist.

7. Befestigungsknopf nach Anspruch 1 bis 6, dadurch gekennzeichnet, dass er als Spritzteil aus Polyamid ausgebildet ist.

### Claims

1. Fixing stud for floor mats in vehicles, having a head part (1) for fitting the floor mat, which head part comprises a surface for applying a rotary tool and a substantially cylindrical shank (3), and having a foot part (2) provided with a screwthread, a seating rim (6) being provided between the head part and foot part, characterised in that, as the screwthread on the foot part (2) of short axial length, a cutting thread (10) of steep pitch with a core diameter, which increases from the screwing-in end over the entire length, and a radius of the screw turn (11), which increases over the entire length, is provided, which cutting thread is open and ends at a distance from the seating rim (6), and that, approximately in the region of the last half turn (12) facing the seating rim (6), the screwthread has at most a very small pitch.

2. Fixing stud, according to Claim 1, characterised in that the cutting thread (10) is arranged parallel to the seating rim (6) in the region of approximately the last half turn (12) and is provided with a constant radius of this half turn (12).

3. Fixing stud, according to Claim 1 and 2, characterised in that the seating rim (6) has a diameter of approximately three times the diameter of the cylindrical shank (3) on the head part (1).

4. Fixing stud, according to Claim 1 to 3, characterised in that the seating rim (6) has an upper and a lower seating face (8, 7).

5. Fixing stud, according to Claim 1 to 4, characterised in that the distance between the last half turn (12) of the cutting thread (10) and the lower seating face (8) on the seating rim (6) is about 3 mm.

6. Fixing stud, according to Claim 1 to 5, characterised in that a cylindrical anchorage shank (9) is provided between the lower seating face (8) on the seating rim (6) and the end of the cutting thread (10).

7. Fixing stud, according to Claim 1 to 6, characterised in that it is made as an injection-moulding of polyamide.

### Revendications

1. Bouton de fixation pour tapis de véhicules automobiles, comportant une partie de tête (1) pour le déboutonnage du tapis, qui comporte une surface pour l'application d'un outil de rotation ainsi qu'un corps essentiellement cylindrique (3), et une partie de pied (2) munie d'un filetage, un bord d'appui (6) étant prévu entre la partie de tête et celle de pied, caractérisé en ce que, comme filetage sur la partie de pied (2), on prévoit, avec une courte longueur axiale, un filetage taraudant (10) à grand pas, avec un diamètre de noyau croissant depuis l'extrémité de vissage sur toute la longueur et avec un rayon de filet (11) qui croît sur toute la longueur et finit ouvert, à une certaine distance du bord d'appui; et en ce que le filetage comporte, au plus un très faible pas, environ dans la zone du dernier demi-filet (12), tourné vers le bord d'appui (6).

2. Bouton de fixation suivant la revendication 1, caractérisé en ce que le filetage taraudant (10) est parallèle au bord d'appui (6) environ dans la zone du dernier demi-filet (12), qui y a un rayon constant.

3. Bouton de fixation suivant la revendication 1 et 2, caractérisé en ce que le bord d'appui (6) a un diamètre environ triple de celui du corps cylindrique (3) qui est sur la partie de tête (1).

4. Bouton de fixation suivant les revendications 1 à 3, caractérisé en ce que le bord d'appui (6) a deux faces d'appui (8, 7), inférieure et supérieure.

5. Bouton de fixation suivant les revendications 1 à 4, caractérisé en ce que la distance entre le dernier demi-filet (12) du filetage taraudant (10) et la surface d'appui inférieure (8), qui est sur le bord d'appui (6), est d'environ 3 mm.

6. Bouton de fixation suivant les revendications 1 à 5, caractérisé en ce qu'entre la surface d'appui inférieure (8), qui est sur le bord d'appui (6), et l'extrémité du filetage taraudant (10), on prévoit un corps cylindrique d'ancrage (9).

7. Bouton de fixation suivant les revendications 1 à 6, caractérisé en ce qu'il peut être une pièce injectée en polyamide.

Fig.1

Fig.2